# EUROPÄISCHE PATENTSCHRIFT

(11) **EP 0 445 621 B1**
(45) Veröffentlichungstag und Bekanntmachung des Hinweises auf die Patenterteilung: **17.05.1995**
(21) Anmeldenummer: 91102751.4
(22) Anmeldetag: 25.02.1991
(51) Int. Cl.: G01N 21/78, G01N 21/77, G01N 31/22, G01N 33/18

(54) **Verfahren und Mittel zur kolorimetrischen Bestimmung von Nitrationen**
Method and agent for the colorimetric determination of nitrate ions
Procédé et agent pour la détermination colorimétrique des ions nitrates

(30) Priorität: 07.03.1990 DE 4007036
(43) Veröffentlichungstag der Anmeldung: 11.09.1991
(73) Patentinhaber: MERCK PATENT GmbH, D-64271 Darmstadt (DE)
(72) Erfinder: Bitsch, Roland, W-6102 Pfungstadt (DE)

(56) Entgegenhaltungen:
- DE-A- 3 405 912
- SOVIET INVENTIONS ILLUSTRATED, Ch Sektion, Woche K13, 11. Mai 1983, Derwent Publications Ltd., London, J04
- GEWÄSSERSCHUTZ-WASSER-ABWASSER 79, Technische Hochschule Aachen 1985, G. HEIL : "Entwicklung einer neuen Methode zur schnellen Bestimmung von Nitrat in Oberflächenwasser, Grundwasser und Trinkwasser"
- THE ANALYST, Band 110, 1985, London, The Analytical Journal of The Royal Society of Chemistry, N. Velghe et al. : "Rapid Spectrophotometric Determination of Nitrate in Mineral Waters with Resorcinol"

## Beschreibung

Die Erfindung betrifft ein Verfahren und Mittel zur kolorimetrischen Bestimmung von Nitrationen in wäßrigen Lösungen.

Der quantitative Nachweis von Nitrationen gewinnt in der Analytik zunehmend an Bedeutung. Nitrat in Trink- und Brauchwasser, in Lebensmitteln, in der Agrikulturchemie sowie in der allgemeinen Umweltschutzanalytik wird in zunehmendem Maße zu einem allgemeinen Qualitätskriterium. Für die Überwachung der Nitratgrenzwerte in Trinkwasser, der Düngemittelrückstände in Lebensmitteln und der Bestimmung des Nitratspiegels in landwirtschaftlich genutzten Böden zur kosteneffektiven Mineraldüngung werden zuverlässige und rationelle Bestimmungsverfahren benötigt. Nitratbestimmungen sind insbesondere bei Verdacht auf gesundheitsschädliche, überhöhte Nitratkonzentrationen von großer Wichtigkeit, um beispielsweise eine potentielle cancerogene Nitrosaminbildung verhindern zu können.

Es sind sowohl physikalische als auch chemische Methoden zur Bestimmung von Nitrat bekannt. Die chemischen Methoden beruhen entweder auf der Reduktion des Nitrats zu Nitrit und dem Nachweis des Nitrits über die Bildung eines Azofarbstoffs oder auf einer Nitrierung von phenolischen Verbindungen unter Bildung farbiger aromatischer Nitroverbindungen.

Während bei den Reduktionsmethoden cancerogene Reagenzien (z.B. Hydrazin) oder toxische Schwermetalle verwendet werden, die mit den Probenabfällen in die Umwelt gelangen, sind die auf der Nitrierung von Phenolderivaten in konzentrierter Schwefelsäure beruhenden Methoden aufwendig und werden von den in der Probe vorhandenen Chloridionen mehr oder weniger stark gestört.

Aus Analyst 110, 313 (1985) ist eine spektrophotometrische Methode zur Bestimmung von Nitrat in Mineralwässern mit Resorcin und konzentrierter Schwefelsäure bei 360 nm beschrieben. Die Untersuchungen zeigten, daß Chloridionen bis zur einer Konzentration von 500 mg/l keinen Einfluß auf das Analysenergebnis haben; bei 1000, 2000 und 3000 mg/l treten Abweichungen des Analysenergebnisses von +2,5, +6,3 bzw. +9 % auf.

In Gewässerschutz, Wasser, Abwasser (GWA) 79, 74 (1985) ist ausgeführt, daß sich die meisten der geprüften organischen Amine und Phenole sowie deren Derivate für einen Nitrattest als ungeeignet erwiesen haben. Im Falle des Brenzkatechins sind Mischungen von Schwefelsäure und Phosphorsäure als völlig ungeeignet beschrieben. Die Bestimmung mit Brenzkatechin in Schwefelsäure wird durch Chloridionen bis 1000 mg/l nicht gestört.

Der Erfindung lag die Aufgabe zugrunde, ein einfaches und empfindliches Verfahren und Reagenz zur Bestimmung von Nitrationen zur Verfügung zu stellen, mit dem exakte Nitratbestimmungen auch in salzhaltigen Proben problemlos durchgeführt werden können.

Überraschenderweise wurde gefunden, daß Nitratbestimmungen auch in stark salzhaltigen Proben wie Meerwasser, Aufschlußlösungen oder in wäßrigen Lösungen von Boden- und Pflanzenexakten exakte Analysenergebnisse liefern, wenn in Gegenwart einer relativ hohen Chloridkonzentration gearbeitet wird.

Gegenstand der Erfindung ist ein Verfahren zur kolorimetrischen Bestimmung von Nitrationen durch Vermischen der zu untersuchenden Probe mit Resorcin und einer Mischung aus Schwefelsäure und Phosphorsäure, das dadurch gekennzeichnet ist, daß 10 bis 30 g/l Chloridionen zugesetzt werden.

Ein weiterer Gegenstand der Erfindung ist ein Mittel zur kolorimetrischen Bestimmung von Nitrationen in einer Probe, enthaltend Resorcin, Schwefelsäure und Phosphorsäure, das gekennzeichnet ist durch einen Gehalt an Chloridionen von 10 bis 30 g/l.

Die Reaktion wird mit Resorcin als Farbreagenz in Gegenwart einer Mischung aus konzentrierten Mineralsäuren durchgeführt, vorzugsweise in einer Mischung aus 90-95 Vol.-% einer 96%igen Schwefelsäure und 5-10 Vol.-% einer 85%igen Phosphorsäure. Als besonders geeignet hat sich eine Mischung von Schwefelsäure und Phosphorsäure im Volumenverhältnis 9:1 herausgestellt. Die Phosphorsäure führt zu farblosen Blindwerten und wirkt gleichzeitig als Maskierungsmittel für Eisenionen.

Die Konzentration des Resorcins kann in weiten Bereichen variiert werden. Die für das erfindungsgemäße Verfahren geeigneten Konzentrationen liegen im Bereich von etwa 0,1 bis 0,2 Gew.-% im Meßansatz, vorzugsweise von 0,12 bis 0,16 Gew.-%. Die erfindungsgemäß einzusetzende Menge an Chloridionen liegt im Bereich von 10 bis 30 g/l.

Es hat sich als zweckmäßig erwiesen, Resorcin und die erforderliche Chloridmenge in Form einer trocknen Mischung vorzusehen, z.B. mit Kochsalz oder auch mit Kochsalz im Gemisch mit anderen anorganischen Salzen, z.B. Kochsalz-Natriumsulfat 1:1 mit 3 bis 8 % Resorcin.

Die Bestimmung von Nitrationen erfolgt in der Weise, daß man das Gemisch aus Resorcin und Chlorid in der Mischung aus Schwefelsäure und Phosphorsäure homogenisiert, die zu untersuchende Probelösung hinzufügt und durchmischt. Es ist auch möglich, zuerst das Resorcin enthaltende Gemisch und anschließend die Mischung der Säuren zur Probelösung zu geben. Bereits nach einigen Minuten ist die Reaktion abgelaufen und kann entweder spektrophotometrisch bei 505 nm oder visuell mittels Farbvergleichsskalen ausgewertet werden. In Gegenwart von Nitrat erhält man mit dem Reagenz eine blaurote Verbindung. Die Reaktion ist sehr empfindlich und ermöglicht Nitratbestimmungen, z.B. auch im Meerwasser, im Bereich von 0-15 mg/l bei Verwendung von 1-cm-Meßküvetten. Durch Variation der Küvettenschichtlänge kann der Meßbereich nach oben oder unten verschoben werden. Der Blindwert ist farblos.

### Beispiel 1

160 mg eines Gemisches aus Natriumchlorid und Natriumsulfat 1:1 mit 5 % Resorcin werden in 2 ml einer Mischung aus 96%iger Schwefelsäure und 85%iger Phosphorsäure (9:1 Volumenteile) homogenisiert. In diese Mischung werden 2 ml Probelösung einpipettiert und gemischt. Nach 15 Minuten Standzeit wird in einer 1-cm-Meßküvette bei 505 nm gegen eine gleichzeitig zubereitete Blindprobe gemessen. Die Konzentration an Nitrationen wird anhand des gemessenen Extinktionswertes an einer zuvor mit Nitrationen enthaltenden Lösungen genau bekannten Gehaltes erstellten Eichkurve abgelesen.

Die Menge des Resorcin enthaltenden Gemisches kann in weiten Bereichen variiert werden; so werden die gleichen Ergebnisse erhalten, wenn anstelle von 160 mg des Gemisches 120 oder 200 mg eingesetzt werden.

### Beispiel 2

### Bestimmung von Nitrat in Meerwasser

Nordseewasser wird mit Kaliumnitrat auf Konzentrationen von 5, 10 und 15 mg/l Nitrat eingestellt. Die Nitratbestimmungen in diesen Proben erfolgen analog Beispiel 1 mit 185 mg des Resorcin enthaltenden Reagenzes gegen einen Blindwert, der mit undotiertem Meerwasser plus Reagenzien gemessen wird. Die Ermittlung der Nitratkonzentration erfolgt mit Standardlösungen bekannter Konzentration. Die Meßwerte der bereiteten Proben stimmen exakt mit den Werten der Kalibrationskurve überein.

### Beispiel 3

Analog Beispiel 1 wird eine Nitratbestimmung mit 145 mg des Resorcin enthaltenden Gemisches durchgeführt. Nach 15 Minuten vergleicht man die entstandene blaurote Färbung der Lösung mit einer Farbskala bzw. Farbscheibe, die Farbvergleichsmuster für definierte Nitratkonzentrationen enthält. Diese Anordnung erlaubt die halbquantitative Nitratbestimmung in Bereichen, die vom Auge noch deutlich als Farbunterschiede differenziert werden können.

## Patentansprüche

1. Verfahren zur kolorimetrischen Bestimmung von Nitrationen durch Vermischen der zu untersuchenden Probe mit Resorcin und einer Mischung aus Schwefelsäure und Phosphorsäure, wobei 10 bis 30 g/l Chloridionen zugesetzt werden.

2. Verfahren nach Anspruch 1, dadurch gekennzeichnet, daß die Bestimmung in einer Mischung aus 90-95 Vol-% 96%iger Schwefelsäure und 5-10 Vol-% 85%iger Phosphorsäure durchgeführt wird.

3. Mittel zur kolorimetrischen Bestimmung von Nitrationen in einer Probe, enthaltend Resorcin, Schwefelsäure und Phosphorsäure, sowie 10 bis 30 g/l an Chloridionen.

## Claims

1. Procedure for the colorimetric determination of nitrate ions by mixing the sample which is to be investigated with resorcinol and a mixture of sulphuric acid and phosphoric acid, wherein 10 to 30 g/l chloride ions are added.

2. Procedure according to Claim 1, characterised in that the determination is carried out in a mixture of 90-95 % by volume 96 % sulphuric acid and 5-10 % by volume 85 % phosphoric acid.

3. Agent for the colorimetric determination of nitrate ions in a sample, containing resorcinol, sulphuric acid and phosphoric acid, plus 10 to 30 g/l chloride ions.

## Revendications

1. Procédé pour la détermination colorimétrique d'ions nitrates en mélangeant l'échantillon à examiner avec de la résorcine et un mélange d'acide sulfurique et d'acide phosphorique, 10 à 30 g/l d'ions chlorures étant ajoutés.

2. Procédé selon la revendication 1, caractérisé en ce que la détermination s'effectue dans un mélange à 90-95 % en volume d'acide sulfurique à 96 % et à 5-10 % en volume d'acide phosphorique à 85 %.

3. Agent pour la détermination colorimétrique des ions nitrates dans un échantillon contenant de la résorcine, de l'acide sulfurique et de l'acide phosphorique, ainsi que 10 à 30 g/l d'ions chlorures.
